Europäisches Patentamt

European Patent Office

Office européen des brevets

(11) Veröffentlichungsnummer: **0 154 172**
**A1**

(12) **EUROPÄISCHE PATENTANMELDUNG**

(21) Anmeldenummer: **85101128.8**

(22) Anmeldetag: **04.02.85**

(51) Int. Cl.⁴: **B 65 G 1/04**

(30) Priorität: **06.02.84 CH 556/84**

(43) Veröffentlichungstag der Anmeldung:
**11.09.85 Patentblatt 85/37**

(84) Benannte Vertragsstaaten:
**AT DE FR GB IT**

(71) Anmelder: **LISTA AG**
**Fabrikstrasse**
**CH-8586 Erlen(CH)**

(72) Erfinder: **Ledergerber, Hugo**
**Friedhofstrasse 12**
**CH-8583 Sulgen(CH)**

(74) Vertreter: **EGLI-EUROPEAN PATENT ATTORNEYS**
**Horneggstrasse 4**
**CH-8008 Zürich(CH)**

(54) Lagereinrichtung zur Lagerung von Werkstücken und Werkzeugen.

(57) Die Lagereinrichtung weist mindestens ein Lagergestell (1, 2) auf, dessen Seitenfläche (4, 5) durch eine Hebeeinrichtung (6) bedienbar ist. Die Hebeeinrichtung (6) weist eine Bedienungsplattform (7) auf, die sich über die gesamte Länge des Lagergestells (1, 2) erstreckt. Zum Heben und Senken der Bedienungsplattform (7) dienen Hydrozylinder (22). Dadurch wird das Bereitstellen von gelagerten Teilen - auch mit mehreren Personen - gleichschnell wie bei vom Boden aus erreichbaren Lagereinrichtungen ermöglicht; mit dem Einsatz der Bedienungsplattform (7) ist die Bedienung von Hochregallagergestellen (1, 2) mit der damit verbundenen Einsparung an Bodenfläche schnell und problemlos möglich.

EP 0 154 172 A1

./...

FIG. 1

- 1 -

Lagereinrichtung zur Lagerung von Werkstücken und
Werkzeugen

---

Die Erfindung betrifft eine Lagereinrichtung zur Lagerung
von Werkstücken und Werkzeugen sowie von Teilen derselben
mit mindestens einem Lagergestell und einer, der Bedienung
des Lagergestells dienenden Hebeeinrichtung.

In allen industriellen und gewerblichen Betrieben stellt
die Lagerhaltung ein wesentliches organisatorisches Problem
dar. Die Notwendighkeit der Lagerhaltung ist hierbei
unbestritten, da sie vor allem Schwankungen zwischen der
Herstellung und dem Verbrauch überbrücken soll, die durch
verschiedene Gründe hervorgerufen werden können.

Die Lagereinrichtungen für Lager weisen grosse Unterschiede auf, je nachdem Rohstoffe, Betriebsmittel oder
Fertigwaren gelagert werden müssen.

Lagereinrichtungen benötigen verhältnismässig viel Platz.
Dies gilt insbesondere für Lager, die nicht nur der
Ueberbrückung der Unterschiede zwischen Herstellung
Verbrauch dienen, sondern in denen auch Werkstücke,
Werkzeuge sowie auch Teile derselben gelagert werden.
Diese dienen für die Zusammenstellung der für ein bestimmtes Erzeugnis erforderlichen Einzelteile oder für
die Bereitstellung von Werkzeugen und Werkzeugsätzen für
die Bearbeitung eines bestimmten Erzeugnisses, z.B. in
einem Bearbeitungszentrum. Der Eingang und Ausgang der
Teile aus den zuletzt genannten Lagern erfolgt im wesentlichen manuell, weshalb die Höhe der verwendeten Lagergestelle nicht höher gewählt werden kann, als sie durch eine
Person direkt oder mit einem einfachen Hilfsmittel, z.B.
einer Leiter, indirekt erreicht und bedient werden kann.

Nun ist es zwar bekannt, auch für solche Teile Lagergestelle zu verwenden, die als Hochregallager ausgebildet
sind. Für die Bedienung dieser Hochregallager, d.h. für
das Bereitstellen von Einzelteilen für ein bestimmtes
Produkt oder das Ablegen der hierzu bestimmten Einzelteile, wird ein verfahrbares Hubgerät verwendet, mit
dem eine Person die gesamte Stirnfläche eines Lagergestells bedienen kann.

Nachteilig ist jedoch, dass das Hubgerät in zwei Richtungen, d.h. nach der Seite und nach der Höhe, verfahren
werden muss, was zusätzliche Zeit in Anspruch nimmt.
Meistens ist auch das Hubgerät nur als Einmanngerät ausgebildet, so dass zusätzliche Zeit beim Bereitstellen
von Einzelteilen entsteht. Bei grossen Regallagern ist
es zwar möglich, ein zweites Hubgerät einzusetzen, jedoch besteht dann die Möglichkeit, dass sich die beiden
Geräte gelegentlich gegenseitig behindern.

Hier setzt die Erfindung ein, der die Aufgabe zugrundeliegt, eine Lagereinrichtung der eingangs beschriebenen
Art so auszugestalten, dass unter Vermeidung der bekannten Nachteile eine rasche Bereitstellung von Einzelteilen aus einem Lager, insbesondere aus einem Hochregallager, durch eine oder mehrere Personen erfolgen
kann.

Diese Aufgabe wird gemäss der Erfindung dadurch gelöst,
dass die Hebeeinrichtung eine Bedienungsplattform aufweist, die sich längs der Seitenfläche des Lagergestells
erstreckt, derart, dass die gesamte Seitenfläche des
Lagergestells erreichbar ist.

Die Erfindung ist in der Zeichnung in einem Ausführungsbeispiel dargestellt und nachfolgend beschrieben. Es
zeigen:

Fig. 1    eine Seitenansicht einer Lagereinrichtung mit
          einer Hebeeinrichtung,

Fig. 2    einen Grundriss der Lagereinrichtung nach

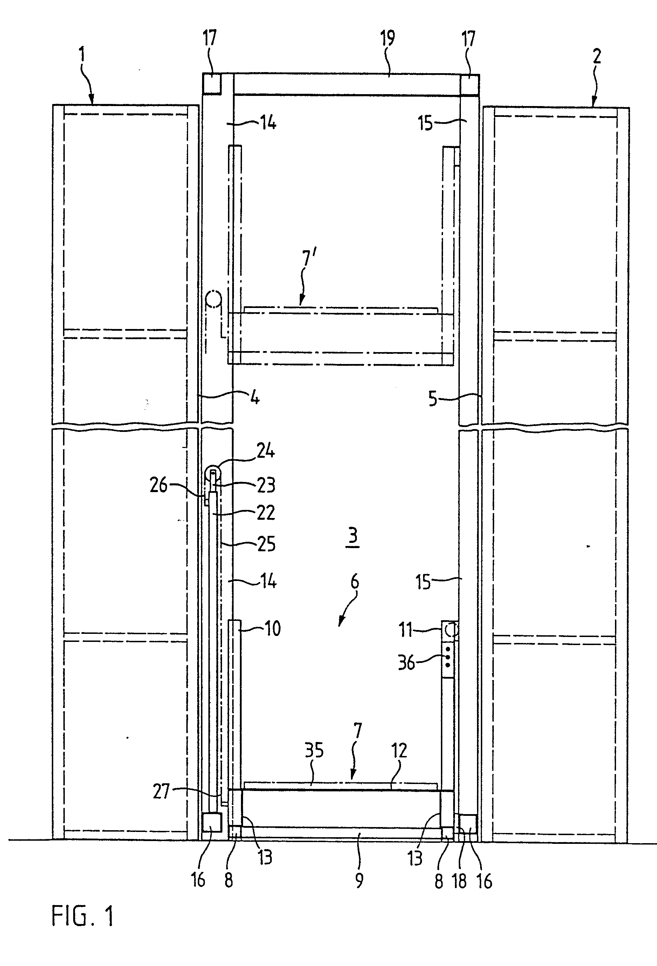

          Fig. 1 und

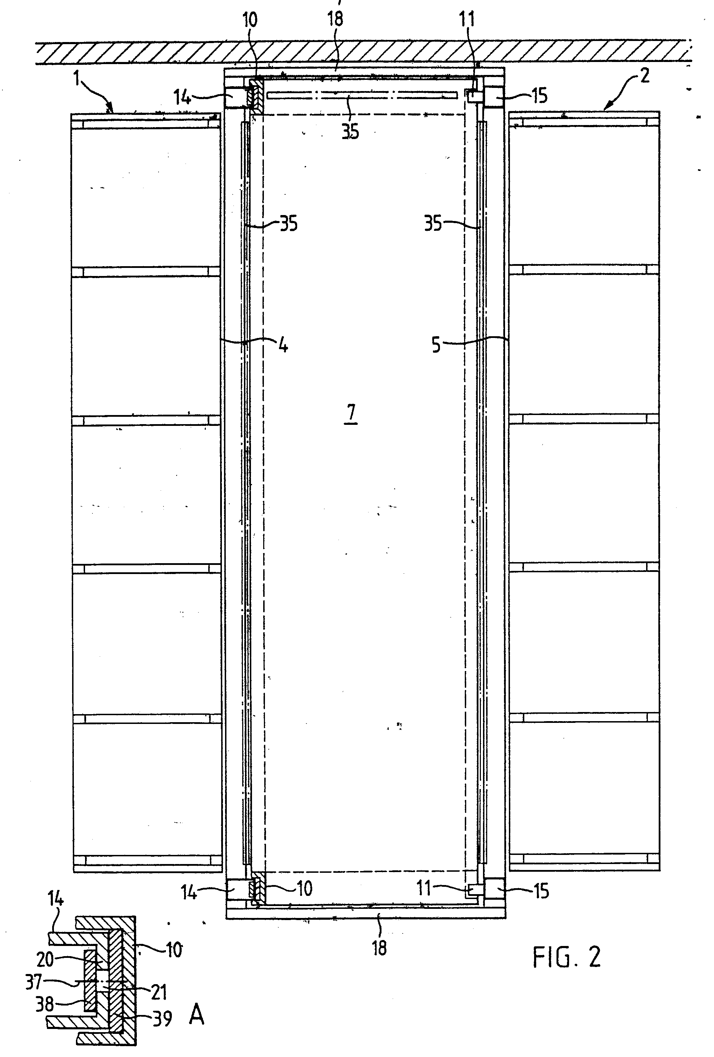

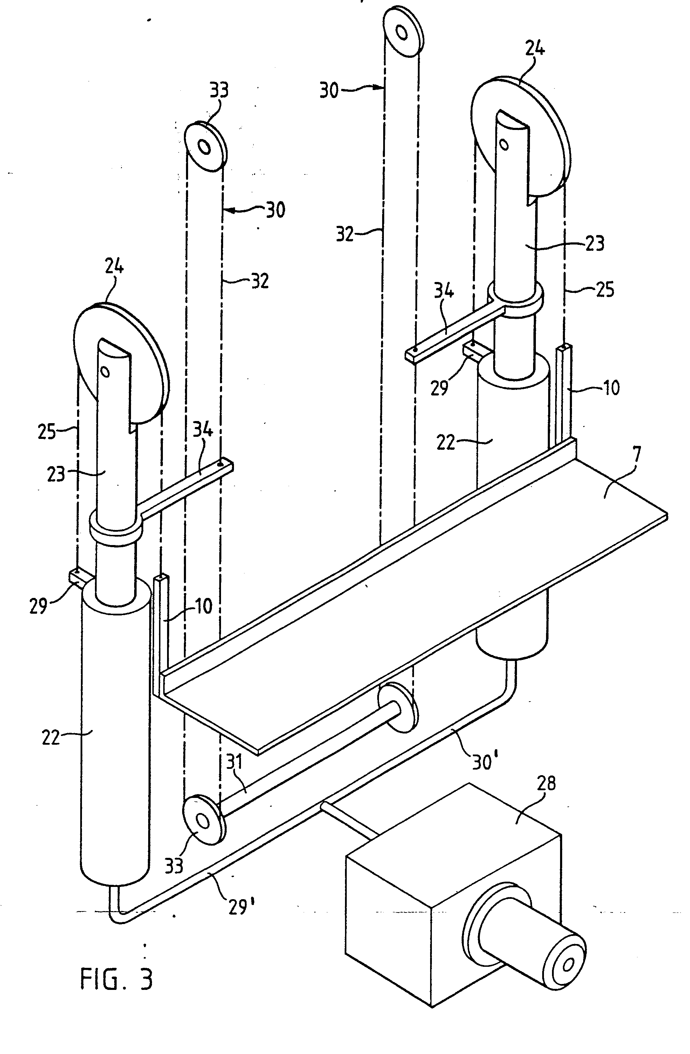

Fig. 3    eine schematische Darstellung einer hydraulischen Hebeeinrichtung für die Lagereinrichtung
          nach Fig. 1 und 2.

Die in Fig. 1 und 2 dargestellte Lagereinrichtung dient
der Lagerung von Werkstücken, Maschinenelementen, Werkzeugen und Teilen dieser Artikel und umfasst zwei Lagergestelle 1, 2, die unter Bildung eines Ganges 3 parallel zueinander aufgestellt sind. Die Detailausbildung
der Lagergestelle 1, 2 ist nicht dargestellt, es können
feste Regale aber auch ausziehbare Regale und Schubladen eingebaut sein. Die Bedienung der Lagergestelle
1, 2 erfolgt von ihren gegen den Gang 3 gegeneinander gerichteten Seitenflächen 4, 5 aus.

Im Gang 3 ist eine Hebeeinrichtung 6 angeordnet, deren wesentliches Merkmal eine Bedienungsplattform 7 ist, die mittels eines noch zu beschreibenden Antriebes zwischen einer unteren Stellung und einer durch 7' bezeichneten oberen Stellung auf und ab verfahrbar ist. Wesentlich ist hierbei, dass die Bedienungsplattform 7 eine solche Ausdehnung aufweist, dass jede Stelle der Seitenflächen 4, 5 von der Bedienungsplattform 7 erreichbar ist. Wie aus Fig. 2 ersichtlich ist, ragt die Bedienungsplattform 7 an ihren Stirnseiten über die Stirnseiten der Lagergestelle 1, 2 hinaus, und zwar soweit, dass die für die Führung und den Antrieb der Bedienungsplattform 7 erforderlichen Teile ausserhalb der Seitenflächen 4, 5 der Lagergestelle 1, 2 liegen. Dadurch wird erreicht, dass die Seitenflächen 4, 5 in ihrer gesamten Ausdehnung ohne Behinderung durch irgendwelche Teile erreicht werden können. Die Plattform 7 weist, siehe Fig. 1 eine bestimmte Bodenstärke auf, so dass dadurch die im Bodenbereich liegenden Partien der Lagergestelle 1, 2 abgedeckt werden. Diese sind jedoch dann zugänglich, wenn die Bedienungsplattform 7 soweit angehoben wird, dass genügend Platz für den Zugang zu diesen im Bodenbereich liegenden Partien vorhanden ist.

Die Bedienungsplattform 7 weist eine Rahmenkonstruktion auf, die sich aus Längsträgern 8, z.B. Vierkantrohren, und Querträgern 9, z.B. U-Profilen, zusammensetzt. An den auf der Seite des Lagergestells 1 liegenden Ecken der Bedienungsplattform 7 sind vertikale U-Profile als Führungen 10 und auf den gegenüberliegenden Ecken Vertikalpfosten 11 befestigt sind. Ein Bodenblech 12 ist mit den Führungen 10 und den Vertikalpfosten 11 verbunden, während die Verbindung des Bodenblechs 12 mit der Rahmenkonstruktion durch je einen Längssteg 13 bewerkstelligt wird. Die Bedienungsplattform 7 ist nur mit den Führungen 10 gelagert, so das sie eine auskragende Fläche bildet. Eine solche Lösung eignet sich im Hinblick auf die verhältnismässig schmale Breite des Ganges 3 und vereinfacht die Führung der Bedienungsplattform 7.

Die Bedienungsplattform 7 ist in einem Rahmengestell gelagert, das sich aus den auf der Seite des Lagergestells 1 angeordneten, mit den Führungen 10 zusammenwirkenden Führungstragsäulen 14, aus auf der Seite des Lagergestells 2 angeordneten Tragsäulen 15, aus untern und obern Längsträgern 16, 17 und aus untern und obern Querträgern 18, 19 zusammensetzt. Die auf der Seite des Lagergestells 1 angeordneten Führungstragsäulen 14 weisen eine besondere Ausbildung auf, die es erlaubt, dass die Führungen 10 formschlüssig an diesen geführt werden können. Zu diesem Zweck werden für die Führungstragsäulen 14 Vierkantrohre verwendet, die nicht nur die formschlüssige Führung der Bedienungsplattform 7 gewährleisten, sondern auch die Bedienungsplattform 7 in auskragender Stellung halten können. Für den letzteren Zweck, siehe Fig. 2, Detail A, weist die gegen die Bedienungsplattform 7 gerichtete Wand 20 der Führungstragsäulen 14 einen Vertikalschlitz 21 auf, durch den Bolzen 37 (strichpunktiert dargestellt) geführt sind, mit dessen die Führung 10 mittels Platten 38, 39 formschlüssig an der Wand 20 gehalten und geführt ist. Die verhältnismässig grosse Länge der Führungen 10 ist im Hinblick auf die Aufnahme der durch die auskragend befestigte Bedienungsplattform 7 entstehenden Belastungen erforderlich.

– 6 –

Für den Antrieb der Bedienungsplattform 7 dienen zwei Hydrozylinder 22, siehe Fig. 1, deren Kolbenstange 23 an ihrem freien Ende ein drehbares Rad 24 aufweisen, über das ein Hüllglied 25, z.B. ein Drahtseil oder eine Kette, geführt ist. Das Hüllglied 25 ist mit einem Ende 26 ortsfest am Rahmengestell oder am Hydrozylinder 22 und mit dem andern Ende an der Bedienungsplattform 7 befestigt. Mit diesem Hüllglied 25 wird beim Betätigen des Hydrozylinders 22 eine Hubübersetzung für die Bedienungsplattform 7 erreicht.

Der gesamte hydraulische Antrieb der Bedienungsplattform 7 ist in Fig. 3 dargestellt. Die beiden Hydrozylinder 22 werden durch ein nicht näher beschriebenes Hydroaggregat 28 betätigt, das die für die Betätigung der Hydrozylinder 22 erforderlichen Druckflüssigkeit über Leitungen 29, 30 liefert. Die Hydrozylinder 22 sind zweckmässig als einfachwirkende Zylinder ausgebildet, da sie mit dem Gewicht der Bedienungsplattform 7 belastet sind und so durch das Gewicht der Bedienungsplattform 7 abgesenkt werden können. Die Kolbenstangen 23 tragen das bereits erwähnte Rad 24, über das das Hüllglied 25 geführt ist. Das Hüllglied ist hier einerseits durch einen Befestigungsstab 29 am Hydrozylinder 22 und andererseits an der Führung 10 der Bedienungsplattform 7 befestigt.

Für den Gleichlauf der beiden Hydrozylinder 22 ist eine Gleichlaufvorrichtung vorgesehen, die sich aus zwei Hülltrieben 30, z.B. Kettentrieben, und einer die beiden Hülltriebe 30 verbindende Verbindungswelle 31 zusammensetzt. Das endlose Hüllglied 32, z.B. eine Kette, ist über zwei Umlenkräder 33 geführt, wobei das eine Trum des Hüllgliedes 32 durch einen Verbindungsarm 34 mit der Kolbenstange 23 gekuppelt ist. Dadurch wird die Bewegung der bei- den Kolbenstangen 23 synchronisiert, so dass die Bedienungsplattform 7 während ihrer Hebe- oder Senkbewegung horizontal gehalten ist.

Die Gleichlaufeinrichtung könnte auch in anderer Weise verwirklicht werden, z.B. dadurch, dass eine Dosierung der Hubzylinder 22 durch zwei miteinander gekuppelte Hydromotoren, z.B. Zahnradmotoren, durchgeführt wird. In diesem Fall entfallen weitere Einrichtungen.

Durch die Ausbildung der Bedienungsplattform 7 in einer Ausdehnung, die eine gleichzeitige Bedienung der gesamten Länge der Lagergestelle 1, 2 erlaubt, kann eine Bedienung der Lagergestelle 1,2 in gleicher Weise wie vom Boden aus erfolgen, so dass auch dann, wenn Hochregallager verwendet werden, eine fast gleichschnelle Bereitstellung von Teilen möglich ist wie bei der Bereitstellung vom Boden aus, nur dass entsprechend weniger Bodenfläche benötigt wird.

Auf der Bedienungsplattform 7 finden sich auch die entsprechenden Steuer- und Sicherungselemente, die zum Heben, Senken und Anhalten der Bedienungsplattform 7 erforderlich sind. Als Sicherheitsvorrichtung können am Umfang der Bedienungsplattform 7 Sicherheitsleisten 35 vorgesehen werden, während an den Vertikalpfosten 11 Bedienungsorgane für das Heben, Senken und Anhalten der Bedienungsplattform 7 vorgesehen werden können.

- 1 -

Patentansprüche

1. Lagereinrichtung zur Lagerung von Werkstücken und Werkzeugen sowie von Teilen derselben mit mindestens einem Lagergestell (1, 2) und einer der Bedienung des Lagergestells dienenden Hebeeinrichtung (6), dadurch gekennzeichnet, dass die Hebeeinrichtung (6) eine Bedienungsplattform (7) aufweist, die sich längs der Seitenfläche (4, 5) des Lagergestells (1, 2) erstreckt, derart, dass die gesamte Seitenfläche (4, 5) des Lagergestells (1, 2) erreichbar ist.

2. Lagereinrichtung nach Anspruch 1, dadurch gekennzeichnet, dass die Bedienungsplattform (7) sich mit ihren Enden vorzugsweise über die Stirnseite des Lagergestells (1, 2) erstreckt, wobei an diesen Enden Führungen für die Führung der Bedienungsplattform an Führungstragsäulen (14) angeordnet sind.

3. Lagereinrichtung nach Anspruch 2, dadurch gekennzeichnet, dass die Führungstragsäulen (14) und Tragsäulen (15) mit horizontalen Längs- und Querträgern (16, 17, 18, 19) ein die Bedienungsplattform (7) umgebendes Rahmengestell bilden.

4. Lagereinrichtung nach Anspruch 2, dadurch gekennzeichnet, dass die Führungen (10) auf der einen Seite der Bedienungsplattform (7) angeordnet sind, wobei die Führungstragsäulen (14) ebenfalls auf dieser Seite des Rahmengestells angeordnet sind und als Rohr mit einer, einen Vertikalschlitz (21) aufweisenden Rohrwand (20) ausgebildet sind, die von

mit den Führungen (10) verbundene Führungsteile
(37, 38, 39) formschlüssig und verschiebbar umklammert ist.

5. Lagereinrichtung nach einem der Ansprüche 2 bis 4,
dadurch gekennzeichnet, dass die Bedienungsplattform (7) auskragend an den Führungen (10) befestigt
ist.

6. Lagereinrichtung nach Anspruch 1, dadurch gekennzeichnet, dass für die Hubbewegung der Bedienungsplattform (7) auf der einen Seite derselben mindestens zwei Hydrozylinder (22) vorgesehen sind, deren
Kolbenstange (23) an ihrem Ende ein Rad (24) trägt,
über das ein den Hub vergrösserndes Hüllglied (25),
z.B. eine Kette, geführt ist, das mit seinem einen
Ende an der Bedienungsplattform (7) und mit seinem
andern Ende ortsfest, z.B. am Rahmengestell oder am
Zylinder des Hydrozylinders (22), befestigt ist.

7. Lagereinrichtung nach Anspruch 6, dadurch gekennzeichnet, dass die Hydrozylinder (22) durch eine Gleichlaufeinrichtung (30, 31) bewegungssynchronisiert sind.

8. Lagereinrichtung nach Anspruch 7, dadurch gekennzeichnet, dass die Gleichlaufeinrichtung je ein dem Hydrozylindern (22) zugeordnetes, mit der Kolbenstange (23)
gekuppeltes Synchronisierglied aufweist, das unter Umwandlung seiner Hubbewegung in eine Drehbewegung über
eine gemeinsame Verbindungswelle (31) mit dem anderen
Synchronisierglied formschlüssig verbunden ist.

9. Lagereinrichtung nach Anspruch 8, dadurch gekennzeichnet, dass das Synchronisierglied ein schlupffreies Hüllgetriebe (30), z.B. ein Kettentrieb, ist,
dessen Hüllglied (32) durch einen Verbindungsarm (34)
mit der Kolbenstange (23) der Hubzylinder (22) gekuppelt ist, wobei mindestens eines der Umlenkräder
(33) des Hülltriebs über die gemeinsame Verbindungswelle (31) mit dem entsprechenden Umlenkrad des
Hülltriebes des andern Hydrozylinders (22) formschlüssig verbunden ist.

10. Lagereinrichtung nach einem der Ansprüche 6 bis 9,
dadurch gekennzeichnet, dass jeder Hydrozylinder
(22) und das zugehörige Synchronisierglied innerhalb der Führungstragsäulen (14) angeordnet sind.

FIG. 1

FIG. 2

FIG. 3

0154172

- 3/3 -

## EINSCHLÄGIGE DOKUMENTE

EP 85101128.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 3 027 888</u> (BASF AG)<br><br>---- | | B 65 G 1/04 |

**RECHERCHIERTE SACHGEBIETE (Int. Cl.4)**

B 65 G

Der vorliegende Recherchenbericht wurde für alle Patentansprüche erstellt.

| Recherchenort | Abschlußdatum der Recherche | Prüfer |
|---|---|---|
| WIEN | 14-05-1985 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82